# EUROPÄISCHE PATENTSCHRIFT

(11) **EP 2 321 628 B1**
(45) Veröffentlichungstag und Bekanntmachung des Hinweises auf die Patenterteilung: **15.02.2012**
(21) Anmeldenummer: 09778597.6
(22) Anmeldetag: 09.09.2009
(51) Int. Cl.: G01N 21/17, G01N 29/24

(54) **PHOTOAKUSTISCHER GASSENSOR UND DESSEN VERWENDUNG**
PHOTOACOUSTIC GAS SENSOR AND USE THEREOF
DÉTECTEUR DE GAZ PHOTO-ACOUSTIQUE ET SON UTILISATION

(30) Priorität: 12.09.2008 DE 102008047658
(43) Veröffentlichungstag der Anmeldung: 18.05.2011
(73) Patentinhaber: Fraunhofer-Gesellschaft zur Förderung der angewandten Forschung e.V., 80686 München (DE); Miopas GmbH, 38640 Goslar (DE)
(72) Erfinder: HEIDRICH, Helmut, 12357 Berlin (DE); LÜTZOW, Peter, 10781 Berlin (DE); SCHLAAK, Wolfgang, 13587 Berlin (DE); VENGHAUS, Herbert, 10557 Berlin (DE); WEGNER, Thomas, 04828 Altenbach (DE)
(74) Vertreter: Lehmann-Dronke, Benedikt
(86) Internationale Anmeldenummer: PCT/EP2009/006743
(87) Internationale Veröffentlichungsnummer: WO 2010/028865

(56) Entgegenhaltungen:
- FIREBAUGH SAMARA L ET AL: "Miniaturization and Integration of Photoacoustic Detection with a Microfabricated ChemicalReactor System" JOURNAL OF MICROELECTROMECHANICAL SYSTEMS, IEEE SERVICE CENTER, PISCATAWAY, NJ, US, Bd. 10, Nr. 2, 1. Juni 2001 (2001-06-01), XP011034631 ISSN: 1057-7157
- FIREBAUGH SAMARA L ET AL: "Miniaturization and integration of photoacoustic detection" JOURNAL OF APPLIED PHYSICS, AMERICAN INSTITUTE OF PHYSICS. NEW YORK, US, Bd. 92, Nr. 3, 1. August 2002 (2002-08-01) , Seiten 1555-1563, XP012056999 ISSN: 0021-8979
- MUNIR Q ET AL: "Fiberoptic sensor in a resonant optoacoustic cell" OPTICS COMMUNICATIONS, NORTH-HOLLAND PUBLISHING CO. AMSTERDAM, NL, Bd. 52, Nr. 4, 15. Dezember 1984 (1984-12-15), Seiten 269-273, XP022596833 ISSN: 0030-4018 [gefunden am 1984-12-15]
- BREGUET J ET AL: "Photoacoustic detection of trace gases with an optical microphone" SENSORS AND ACTUATORS A, ELSEVIER SEQUOIA S.A., LAUSANNE, CH, Bd. 48, Nr. 1, 1. Mai 1995 (1995-05-01), Seiten 29-35, XP004303569 ISSN: 0924-4247

## Beschreibung

Die Erfindung betrifft einen Gassensor mit einem mechanischen Mikroresonator nach dem Oberbegriff des Hauptanspruchs sowie eine Verwendung eines derartigen Sensors zum Analysieren einer Gaszusammensetzung.

Ein gattungsgemäßer Sensor weist eine Anregungsvorrichtung zum optischen Anregen einer mechanischen Schwingung des Mikroresonators sowie eine Auslesevorrichtung zum Detektieren der Schwingung des Mikroresonators auf. Ein derartiger Sensor ist beispielsweise aus der Druckschrift WO 03/104767 A2 bekannt. Der dort beschriebene Sensor kann zum selektiven Detektieren von Gasen verwendet werden, indem ein in einer Umgebung des Mikroresonators befindliches Gas mit Licht einer Absorptionsfrequenz des Gases bestrahlt wird, wobei dieses Licht mit einer Resonanzfrequenz des Mikroresonators moduliert wird. Dabei kann die Absorptionsfrequenz einer Absorptionsspektrallinie des Gases entsprechen oder im Fall einer höherharmonischen Anregung einem ganzzahligen Vielfachen davon. Möglich ist auch eine subharmonische Anregung. Eine Absorption dieses Lichts durch das Gas bewirkt dann eine Druckschwankung mit einer der Resonanzfrequenz des Mikroresonators entsprechenden Zeitabhängigkeit, wodurch der Mikroresonator zum Schwingen angeregt wird. Da dabei eine Schwingungsamplitude des Mikroresonators signifikant davon abhängt, ob und wie stark das Gas in der Umgebung des Mikroresonators Licht der Frequenz bzw. Wellenlänge des zum Anregen verwendeten Lichts absorbiert, kann von einer Beobachtung einer Schwingung des Mikroresonators auf eine Zusammensetzung des Gases zurückgeschlossen werden. Bei dem Stand der Technik aus der genannten Druckschrift wird die Schwingung des Mikroresonators dazu detektiert, indem eine durch eine Bewegung des Mikroresonators erzeugte Piezospannung gemessen wird, die mechanische Schwingung also in ein elektrisches Signal umgewandelt wird.

Nachteiligerweise kann der beschriebene Sensor daher nicht in Umgebungen eingesetzt werden, in denen ein Betrieb elektrischer Geräte schädliche Wirkungen haben kann. Das betrifft insbesondere Umgebungen mit starken elektrischen Feldern, explosiven oder leicht entzündlichen Medien und aus anderen Gründen empfindliche Umgebungen, beispielsweise in medizinischen Untersuchungsanordnungen.

Ein weiterer bekannter Gassensor umfasst ein auf einem Halbleitersubstrat angeordnetes optisches Mikrofon, wobei sowohl die Anregung als auch die Auslesung über Lichtwellenleiter erfolgt (S.L. Firebaugh et al, J. Microelectromechanical Systems, 10 (2001), seiten 232-237).

Der Erfindung liegt also die Aufgabe zugrunde, einen entsprechenden Sensor zu entwickeln, der eine Gaszusammensetzung auch in elektrisch empfindlichen Umgebungen zu analysieren erlaubt. Der Erfindung liegt ferner die Aufgabe zugrunde, ein Verfahren zum Analysieren einer Gaszusammensetzung vorzuschlagen, das auch in einer entsprechend empfindlichen Umgebung durchführbar ist.

Diese Aufgabe wird erfindungsgemäß gelöst durch einen Gassensor mit den kennzeichnenden Merkmalen des Hauptanspruchs in Verbindung mit den Merkmalen des Oberbegriffs des Hauptanspruchs sowie durch eine Verwendung dieses Sensors mit den Merkmalen des Anspruchs 15. Vorteilhafte Ausgestaltungen und Weiterentwicklungen der Erfindung ergeben sich mit den Merkmalen der Unteransprüche.

Bei dem vorgeschlagenen Gassensor, der nachfolgend gelegentlich auch nur als Sensor bezeichnet wird, umfasst die Auslesevorrichtung einen zusammen mit dem Mikroresonator auf einem dielektrischen oder halbleitenden Substrat realisierten Wellenleiter zum optischen Auslesen der Schwingung des Mikroresonators, wobei die Anregungsvorrichtung einen auf demselben Substrat realisierten Lichtwellenleiter aufweist, der eine Anregungslichtquelle optisch mit einer unmittelbaren Umgebung des Mikroresonators verbindet. Der Sensor umfasst damit eine planar-integrierte Optik oder wird durch eine planar-integrierte Optik gebildet. Als Substrat wird dabei typischerweise ein Halbleitersubstrat verwendet. Alternativ könnte das Substrat aber auch aus Kunststoff, beispielsweise aus Plexiglas oder einem anderen Polymer, oder aus Glas gebildet sein. Dadurch, dass zum Auslesen der Schwingungen des Mikroresonators ein optischer Wellenleiter vorgesehen ist, wird es möglich, die mechanische Schwingung des Mikroresonators optisch und damit ohne Einsatz von Elektrizität auszulesen. Das ermöglicht einen Einsatz des Sensors auch in Umgebungen, in denen elektrische Felder und eine Präsenz elektrischer Leiter vermieden werden muss. Dabei kann der zum optischen Auslesen der Schwingung vorgesehene Wellenleiter unter Umständen mit dem Lichtwellenleiter der Anregungsvorrichtung identisch sein. Dadurch, dass der Wellenleiter der Auslesevorrichtung, der Mikroresonator und der Lichtwellenleiter der Anregungsvorrichtung auf einem einzigen Substrat realisiert sind, ergibt sich nicht nur ein vorteilhaft kompakter Aufbau des Sensors. Zusätzlich wird dadurch verhindert, dass sich der Sensor mit der optischen Auslesevorrichtung und der optischen Anregungsvorrichtung dejustieren kann, was den Sensor unempfindlich macht und womit sich ein bei vergleichbaren Anordnungen sonst erforderlicher Justageaufwand erübrigt.

Der beschriebene Sensor kann in vorteilhaft einfacher Weise zum Analysieren einer Gaszusammensetzung verwendet werden, indem ein in der Umgebung des Resonators befindliches und zu analysierendes Gas mit - nicht notwendigerweise sichtbarem - Licht der Anregungslichtquelle so bestrahlt wird, dass der Mikroresonator in einen Schwingungszustand versetzt wird, wenn eine Wellenlänge dieses Lichts einer Absorptionswellenlänge des Gases entspricht, wobei der Schwingungszustand mittels der Auslesevorrichtung optisch detektiert wird. Dazu kann eine Modulations- oder Pulsfrequenz des zum Anregen verwendeten Lichts einer Resonanzfrequenz des Mikroresonators entsprechend gewählt werden. Als Absorptionswellenlänge seien dabei nicht nur Wellenlängen bezeichnet, die einer Absorptionsspektrallinie des Gases entsprechen, sondern auch insbesondere ganzzahlige Vielfache oder einfache Bruchteile davon, die eine höher- oder subharmonische Anregung erlauben. Eine Spektralanalyse des Gases ist so in vorteilhafter Weise ohne elektrische Leiter in der Umgebung des Gases und bei Vermeidung externer elektrischer Felder möglich.

Bei bevorzugten Ausführungen der Erfindung wird das Substrat durch einen Halbleiterwafer oder einen Teil eines Halbleiterwafers gebildet. Dann kann der Sensor oder auch eine große Zahl entsprechender Sensoren in einfacher Weise hergestellt werden, indem eine auf dem Halbleiterwafer angeordnete optische Sperrschicht, die beispielsweise aus Siliziumoxid gebildet sein kann, und eine über der Sperrschicht angeordnete Wellenleiterschicht durch Photolithographie und Ätzen so strukturiert werden, dass der Lichtwellenleiter der Anregungsvorrichtung und der Wellenleiter der Auslesevorrichtung in der Wellenleiterschicht gebildet werden, wobei die Sperrschicht stellenweise so entfernt wird, dass der Mikroresonator durch eine hinterschnittige Struktur gebildet wird. Dabei kann der Mikroresonator in der Wellenleiterschicht und/oder in einer zwischen der Wellenleiterschicht und der Sperrschicht angeordneten weiteren Schicht gebildet werden. Die Wellenleiterschicht kann durch eine auf der Sperrschicht angeordnete Halbleiterschicht, beispielsweise aus Silizium, gebildet werden und kann auch eine auf der Sperrschicht oder auf einer solchen Halbleiterschicht angeordnete weitere Schicht, beispielsweise aus Siliziumnitrit, umfassen. Die Wellenleiterschicht weist jedenfalls jeweils einen höheren optischen Index als die optische Sperrschicht auf. Die Sperrschicht kann zur Bildung der hinterschnittigen Struktur in der Umgebung des Mikroresonators mittels eines gasförmig oder dampfförmig applizierten und/oder anschließend durch Supercritical Drying entfernten Ätzmittels abgetragen werden. Als Sperrschicht oder optische Sperrschicht sei dabei in der vorliegenden Schrift ein optischer Puffer bezeichnet.

So erhält man einen vorteilhaft einfach realisierbaren Aufbau des Sensors, bei dem der Mikroresonator und/oder der Lichtwellenleiter der Anregungsvorrichtung und/oder der Wellenleiter der Auslesevorrichtung in oder auf einer entsprechend strukturierten Halbleiterschicht oder dielektrischen Schicht realisiert sind, die durch eine stellenweise, insbesondere unter freischwingenden Teilen des Mikroresonators, entfernte Sperrschicht von dem Substrat getrennt ist. Dabei wird die Halbleiterschicht typischerweise durch eine Siliziumschicht gebildet sein, während die Sperrschicht bei bevorzugten Ausführungen aus SiO₂ gebildet sein kann, um eine Herstellung des Sensors mit bewährten Techniken zu erlauben. Auch das Substrat kann bei bevorzugten Ausführungen aus Silizium gebildet sein oder eine Siliziumschicht umfassen.

Die Anregungslichtquelle kann z.B. eine Laserdiode oder eine andere Licht-emittierende Diode sein, wobei sich ein besonders kompakter Aufbau des Sensors ergibt, wenn auch diese Diode auf dem Substrat realisiert ist. Allerdings wird damit der Verzicht auf elektrische Anschlüsse aufgegeben. Alternativ kann die Anregungslichtquelle aber auch z.B. durch Faserkopplung mit dem auf dem Substrat angeordneten Lichtwellenleiter der Anregungsvorrichtung verbunden sein. Entsprechendes kann für eine von der Auslesevorrichtung umfasste Ausleselichtquelle, die ebenfalls als Licht-emittierende Diode ausgeführt sein kann, und für ein oder mehrere lichtempfindliche Elemente der Auslesevorrichtung gelten. Auch solche lichtempfindlichen Elemente können auf dem Substrat realisiert oder mit dem Wellenleiter der Auslesevorrichtung fasergekoppelt sein.

Die Anregungslichtquelle sollte - vorzugsweise durch eine entsprechend programmtechnisch eingerichtete Steuer- oder Kontrolleinheit - gepulst, wellenlängen- oder intensitätsmoduliert betreibbar sein mit einer Puls- oder Modulationsfrequenz, die einer Resonanzfrequenz des Mikroresonators entspricht oder eine sub- oder höherharmonische Anregung des mechanischen Mikroresonators erlaubt. Damit lässt sich eine besonders deutliche Abhängigkeit einer Schwingungsamplitude des Mikroresonators von einer Absorptionsfrequenz des ihn umgebenden Gases erreichen. Um eine Spektralanalyse eines Gases über einen ausgedehnten Wellenbereich zu ermöglichen, kann die Anregungslichtquelle zum Ausstrahlen von Licht durchstimmbarer Wellenlänge eingerichtet sein. Ein Absorptionsspektrum des den Mikroresonator umgebenden Gases lässt sich dann in einfacher Weise aufnehmen, indem die Schwingungsamplitude des Mikroresonators in Abhängigkeit von der Wellenlänge der Anregungslichtquelle aufgezeichnet wird, während diese Wellenlänge bei gleich bleibender Modulations- oder Pulsfrequenz durchgestimmt wird.

Der mechanische Mikroresonator kann einen oder zwei Schwingarme aufweisen, die auch als Cantilever oder Zungen bezeichnet werden können. Typischerweise wird der mindestens eine Schwingarm dabei eine Länge von zwischen 15 µm und 300 µm aufweisen. Die günstigste Länge wird dabei von einer Breite des Schwingarms abhängen und etwa ein 10- bis 300-faches dieser Breite betragen. Der so gebildete mechanische Mikroresonator kann z.B. eine Resonanzfrequenz von zweckmäßigerweise zwischen 1 kHz und 1 MHz haben. Wenn der Mikroresonator nur einen Schwingarm aufweist, kann der Lichtwellenleiter der Anregungsvorrichtung so geführt werden, dass eine Lichtaustrittsfläche dieses Lichtwellenleiters auf einen Raum zwischen dem Schwingarm und einer festen Wand gerichtet ist, damit eine Anregung des dort befindlichen Gases eine Schwingung des Schwingarms zur Folge hat. Der Mikroresonator kann aber auch zwei stimmgabelartig gegeneinander schwingende Schwingarme aufweisen, wobei der Lichtwellenleiter der Anregungsvorrichtung in diesem Fall typischerweise auf einen Raum zwischen den beiden Schwingarmen gerichtet ist, damit eine Bestrahlung des dort befindlichen Gases möglichst effizient eine Schwingung des Mikroresonators anregen kann.

Die Auslesevorrichtung des Sensors kann so gestaltet sein, dass sich der Wellenleiter oder ein weiterer Wellenleiter der Auslesevorrichtung über den Schwingarm oder über mindestens einen der Schwingarme des Mikroresonators erstreckt. Dazu kann der mindestens eine Schwingarm entweder vollständig als Wellenleiter ausgebildet sein oder eine Schicht umfassen, die den Wellenleiter bildet. Dadurch wird in konstruktiv einfacher Weise erreicht, dass sich optische Eigenschaften des Wellenleiters und damit der Auslesevorrichtung mit einer Bewegung des Mikroresonators ändern, um ein Detektieren der Schwingung des Mikroresonators zu ermöglichen.

Der Wellenleiter oder ein weiterer Wellenleiter der Auslesevorrichtung kann sich insbesondere so über einen ersten Schwingarm und einen zweiten Schwingarm des Mikroresonators erstrecken, dass ein Überkoppeln von Licht von einem Ende des ersten Schwingarms zu einem Ende des zweiten Schwingarms möglich ist. Dazu kann z.B. jeder der Schwingarme eine Aus- oder Einkoppelfläche aufweisen, wobei diese Koppelflächen einander parallel gegenüberliegend angeordnet sind. Bei einer derartigen Anordnung kann z.B. eine Änderung einer optischen Kopplung zwischen den Enden der Schwingarme und damit eine Änderung der Transmission zwischen den Schwingarmen in Abhängigkeit von einer durch die Schwingung verursachten Bewegung der Schwingarme zum Detektieren der Schwingung verwendet werden.

Die Koppelflächen an den Enden der beiden Schwingarme können auch teilreflektierend ausgeführt sein, so dass sie einen Fabry-Perot-Resonator zwischen den beiden Schwingarmen bilden. In diesem Fall kann eine Änderung von Resonanzeigenschaften des so gebildeten Fabry-Perot-Resonators, die durch eine Schwingung der Schwingarme verursacht wird, zum Detektieren der Schwingung verwendet werden.

Es kann vorgesehen sein, dass der sich über die schwingfähigen Schwingarme des Mikroresonators erstreckende Wellenleiter optisch mit einem weiteren Wellenleiter der Auslesevorrichtung gekoppelt ist, beispielsweise über ein optisches Viertor wie einen Richtkoppler, mit dem eine Kopplung durch Übersprechen im evaneszenten Feld bewirkt wird. Dann kann der sich über die Schwingarme erstreckende Wellenleiter einen optischen Resonator bilden, dessen optische Eigenschaften vom Schwingungszustand des mechanischen Mikroresonators abhängen und der durch die erwähnte Kopplung zum Schwingen angeregt wird.

Bei einer anderen Ausführung kann der Wellenleiter der Auslesevorrichtung so an den Schwingarm oder an mindestens einen der Schwingarme des Mikroresonators herangeführt sein, dass aus diesem Wellenleiter austretendes Licht nach einer Reflexion an dem Schwingarm des Mikroresonators wieder in den Wellenleiter einkoppelbar ist. Da eine Phase des so wieder in den Wellenleiter eingekoppelten Lichts sehr sensitiv von einer aktuellen Position des Schwingarms abhängt, kann auch auf diese Weise ein Schwingungszustand des mechanischen Mikroresonators sehr genau detektiert werden.

In besonders zuverlässiger Weise kann eine Schwingung des mechanischen Mikroresonators detektiert werden, wenn die Auslesevorrichtung mindestens zwei auf dem gemeinsamen Substrat realisierte Wellenleiter umfasst, die optisch miteinander gekoppelt sind, wobei einer der Wellenleiter mit dem mechanischen Mikroresonator gekoppelt ist, wobei an einem Ende eines der beiden Wellenleiter eine Ausleselichtquelle angeordnet ist und wobei an einem anderen Ende eines dieser beiden Wellenleiter ein lichtempfindliches Element angeordnet ist. Dabei kann die Ausleselichtquelle durch eine vorzugsweise auf demselben Substrat realisierte Licht-emittierende Diode, beispielsweise eine Laserdiode, gebildet sein, das lichtempfindliche Element als ein vorzugsweise auf demselben Substrat realisierter Detektor, beispielsweise in Form einer Photodiode. Eine Kopplung zwischen den zwei Wellenleitern kann durch Übersprechen in evaneszenten Feld erreicht werden, beispielsweise über ein optisches Viertor wie einen Richtkoppler. Auf diese Weise können die beiden Wellenleiter als Michelson-Interferometer fungieren. Eine Abtastung des Schwingungszustands des Mikroresonators kann so interferometrisch erfolgen. Dazu kann ein von der Ausleselichtquelle kommender Zuführungswellenleiter streckenweise parallel zu einem zum Detektor führenden Wellenleiter verlaufen, so dass der zuführungswellenleiter relativ zu dem letztgenannten Wellenleiter schwingen kann und eine Größe eines überkoppelnden Signals vom Schwingungszustand des Mikroresonators abhängt.

Der mindestens eine Wellenleiter der Auslesevorrichtung kann einen Wellenleiterschaltkreis bilden, der vorzugsweise in Einmodentechnik, also ausschließlich oder unter anderem mit einmodigen Wellenleitern, ausgeführt ist. Die Ausleselichtquelle sollte also so mit dem Wellenleiter der Auslesevorrichtung oder einem der Wellenleiter der Auslesevorrichtung zusammenwirken, dass von der Ausleselichtquelle in den Wellenleiter eingekoppeltes Licht dort nur eine räumliche Mode umfasst. An Koppelflächen können die Wellenleiter aufgetapert sein, um ein verlustärmeres Ein- oder Auskoppeln von Licht zu ermöglichen. Auch können die Koppelflächen dazu entspiegelt sein.

Ausführungsbeispiele der Erfindung werden nachfolgend anhand der Fign. 1 bis 10 erläutert. Es zeigen
- Fig. 1: eine Aufsicht auf einen Sensor in einer ersten Ausführung der Erfindung sowie darunter einen Querschnitt durch diesen Sensor an zwei verschiedenen Stellen,
- Fig. 2: in entsprechender Darstellung eine Aufsicht eines Sensors in einer zweiten Ausführung der Erfindung sowie einen Querschnitt durch einen Teil dieses Sensors,
- Fig. 3: in entsprechender Darstellung ein drittes Ausführungsbeispiel für einen entsprechenden Sensor,
- Fig. 4: eine perspektivische Ansicht eines mechanischen Mikroresonators zur Verwendung in einem vergleichbaren Sensor,
- Fig. 5: eine Darstellung des Mikroresonators aus Fig. 4, die veranschaulicht, wie dieser zu einer mechanischen Schwingung angeregt wird,
- Fig. 6: in entsprechender Darstellung eine alternative Anregung einer mechanischen Schwingung dieses Mikroresonators,
- Fig. 7: eine perspektivische Darstellung desselben Mikroresonators, in der veranschaulicht ist, wie eine mechanische Schwingung des Mikroresonators optisch ausgelesen wird,
- Fig. 8: eine perspektivische Ansicht eines alternativ gestalteten Mikroresonators für einen entsprechenden Sensor,
- Fig. 9: eine entsprechende Darstellung eines Mikroresonators für einen entsprechenden Sensor in einer weiteren Abwandlung und
- Fig. 10: eine perspektivische Ansicht eines Mikroresonators für einen Sensor der in Fig. 1 abgebildeten Art.

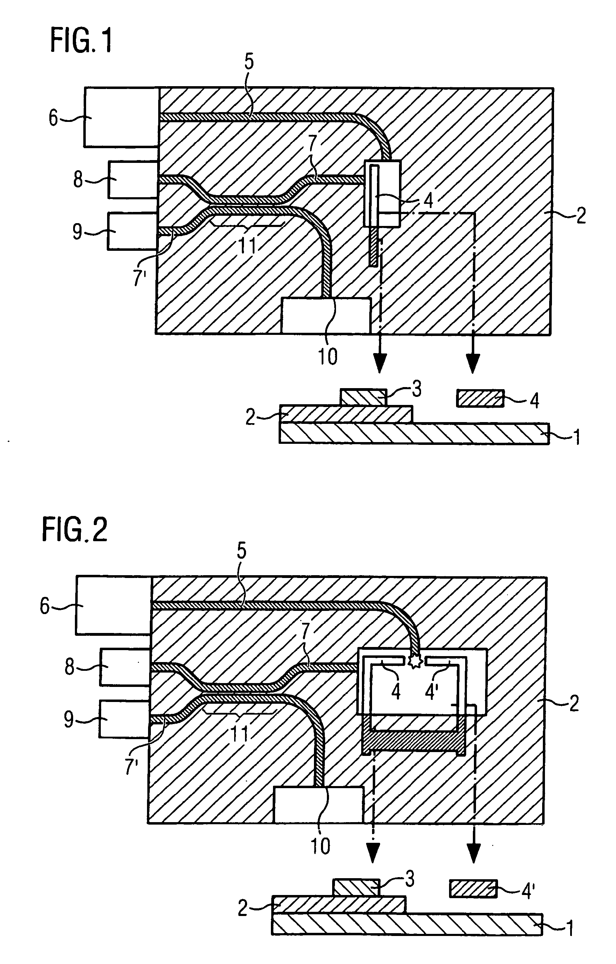

Bei dem in Fig. 1 dargestellten Sensor handelt es sich um einen Gassensor, der auf Basis eines Substrats 1 aufgebaut ist, das eine Dicke von etwa 0,5 mm hat und durch einen Teil eines Siliziumwafers gebildet ist. Auf diesem Substrat 1 ist eine Sperrschicht 2 angeordnet, die eine Dicke von etwa 2 µm hat und aus SiO₂ gebildet ist. Stehen gebliebene Reste einer ursprünglich flächendeckend über der Sperrschicht 2 angeordneten Siliziumschicht 3 bilden durch eine entsprechende Strukturierung einen durch einen Schwingarm 4 realisierten mechanischen Mikroresonator, einen Lichtwellenleiter 5, der eine Anregungslichtquelle 6 mit einer unmittelbaren Umgebung des Schwingarms 4 verbindet, sowie zwei optische Wellenleiter 7 und 7', die zum optischen Auslesen einer mechanischen Schwingung des Mikroresonators dienen. Die Sperrschicht 2, die in der Aufsicht aus Fig. 1 schraffiert dargestellt ist, ist stellenweise entfernt, insbesondere unter einem freischwingenden Teil des Schwingarms 4. Die Anregungslichtquelle 6 ist durch eine Laserdiode gegeben und bildet zusammen mit dem Lichtwellenleiter 5 eine Anregungsvorrichtung zum optischen Anregen einer mechanischen Schwingung des Mikroresonators. Unter Umständen kann auch diese Laserdiode, anstelle derer auch eine andere Licht-emittierende Diode verwendet werden kann, auf dem Substrat 1 realisiert sein. Um eine Schwingung des Schwingarms 4 anregen zu können, ist die Anregungslichtquelle 6 zum Ausstrahlen von Licht durchstimmbarer Wellenlänge eingerichtet, wobei sie zusätzlich gepulst, wellenlängenmoduliert oder intensitätsmoduliert betreibbar ist mit einer Puls- oder Modulationsfrequenz, die der oder einer Resonanzfrequenz des mechanischen Mikroresonators entspricht.

Die Wellenleiter 7 und 7' bilden zusammen mit einer an einem Ende des Welleleiters 7 angeordneten Laserdiode 8, einer an einem Ende des anderen Wellenleiters 7' angeordneten Photodiode 9, einem an einem entgegengesetzten Ende des Wellenleiters 7' angeordneten Spiegel 10 und einer in Fig. 1 nicht abgebildeten Kontrolleinheit zum Ansteuern der Laserdiode 8 und zum Auswerten eines Signals der Photodiode 9 eine interferometrische Auslesevorrichtung, mit der die mechanische Schwingung des Mikroresonators detektiert werden kann. Dazu ist der Wellenleiter 7 so an den Schwingarm 4 des Mikroresonators herangeführt, dass aus dem Wellenleiter 7 austretendes Licht nach einer Reflexion an dem Schwingarm 4 wieder in den Wellenleiter 7 eingekoppelt wird. Außerdem sind die beiden Wellenleiter 7 und 7' mittels eines Richtkopplers 11, der ein optisches Viertor bildet, optisch derart miteinander gekoppelt, dass ein Übersprechen im evaneszenten Feld der beiden Wellenleiter 7 und 7' möglich ist. Dazu laufen die Wellenleiter 7 und 7' im Bereich des Richtkopplers 11 in einem engen Abstand parallel nebeneinander, so dass sich in beiden Wellenleitern 7 und 7' korrelierte optische Schwingungen ausbilden können, wobei eine Größe eines im Richtkoppler 11 überkoppelnden Signals vom Schwingungszustand des Mikroresonators abhängt. Die Ursache dafür liegt in der Tatsache, dass eine optische Länge eines durch den Wellenleiter 7 gebildeten Messarm von einem Bewegungszustand oder Schwingungszustand des Schwingarms 4 abhängt. Die Auslesevorrichtung bildet einen optischen Interferometer, der neben dem genannten Messarm einen Referenzarm aufweist, der durch den Wellenleiter 7' gebildet wird. Dadurch kann eine Abtastung des Schwingungszustands des Mikroresonators mit der beschriebenen Auslesevorrichtung interferometrisch erfolgen. Anstelle der Laserdiode 8 könnte auch eine andere LED verwendet werden.

Der auf dem Substrat 1 gebildete Teil des beschriebenen Gassensors bildet eine planar-integrierte Optik, wobei insbesondere die Wellenleiter 7 und 7' in Einmodentechnik realisiert sind, also derart dimensioniert sind, dass sich von der Laserdiode 8 eingekoppeltes Licht in den Wellenleitern 7 und 7' mit nur einer räumlichen Mode ausbreitet.

Um mit dem in Fig. 1 gezeigten Gassensor eine Zusammensetzung eines in der Umgebung des Mikroresonators befindlichen Gases zu analysieren, wird diese Umgebung mit der Anregungslichtquelle 6 mit Licht unterschiedlicher Wellenlänge bestrahlt, wobei dieses Licht jeweils durch Pulsen, Wellenlängen- oder Intensitätsmodulation mit der Resonanzfrequenz des mechanischen Mikroresonators moduliert wird. Wenn die Wellenlänge dieses Lichts einer Absorptionswellenlänge - eventuell einer subharmonischen oder höherharmonischen Anregungswellenlänge - des Gases entspricht, wird der Schwingarm 4 zum Schwingen angeregt, weil sich dann in der Umgebung des Schwingarms 4 ein sich mit der Resonanzfrequenz ändernder Druck einstellt. Der Schwingungszustand des Mikroresonators wird dabei in bereits beschriebener Weise mittels der Auslesevorrichtung detektiert, so dass eine Spektralanalyse des Gases ohne elektrische Leiter in der Umgebung des Gases erfolgen kann.

Auch die Laserdiode 8 und die Photodiode 9 der Auslesevorrichtung können auf dem Substrat 1 realisiert sein, also als Bestandteil der auf dem Substrat 1 gebildeten integrierten Optik. Anstelle des erwähnten Siliziumwafers kann bei alternativen Ausführungen auch ein anderes dielektrisches Material zur Bildung des Substrats 1 verwendet werden.

Eine andere Ausführung eines entsprechenden Gassensors ist in Fig. 2 dargestellt. Wiederkehrende Merkmale sind dabei, wie auch in den folgenden Figuren, wieder mit denselben Bezugszeichen versehen, ohne noch einmal im Einzelnen erläutert zu werden. Der in Fig. 2 gezeigte Gassensor unterscheidet sich von dem zuvor beschriebenen Ausführungsbeispiel lediglich dadurch, dass der mechanische Mikroresonator zwei stimmgabelartig gegeneinander schwingende Schwingarme 4 und 4' aufweist. Dabei sind die Schwingarme 4 und 4' wieder so dimensioniert, dass der Mikroresonator eine Resonanzfrequenz gleicher Größenordnung hat wie bei dem zuvor beschriebenen Ausführungsbeispiel. Der Lichtwellenleiter 5 der Anregungsvorrichtung ist in diesem Fall auf einen Spalt zwischen den beiden Schwingarmen 4 und 4' gerichtet, damit bei einem Betrieb der Anregungslichtquelle 6 in zuvor beschriebener Weise z.B. die Grundmode des Mikroresonators angeregt wird, in der die Schwingarme 4 und 4' gegeneinander schwingen. Statt der Grundmode kann in entsprechender Weise auch eine andere Mode des mechanischen Mikroresonators angeregt werden.

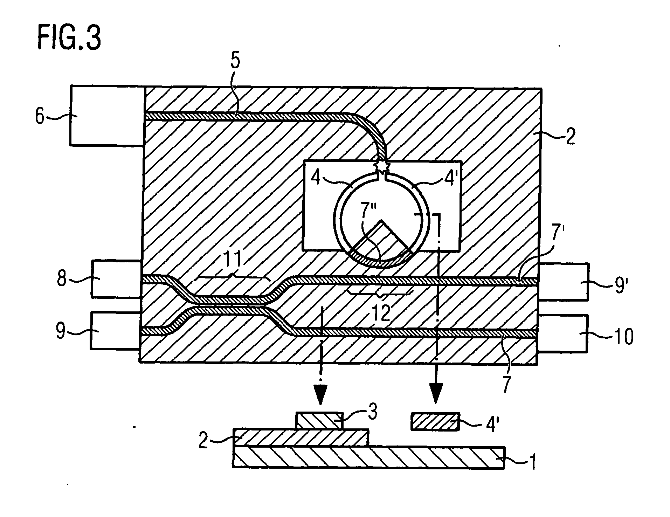

Ein weiteres Ausführungsbeispiel eines ähnlichen Gassensors ist in Fig. 3 gezeigt. Auch hier weist der Mikroresonator des Gassensors zwei stimmgabelartig gegeneinander schwingende Schwingarme 4 und 4' auf, wobei die Auslesevorrichtung, abweichend von dem zuvor beschriebenen Ausführungsbeispiel, einen weiteren Wellenleiter 7" aufweist, der sich über die beiden Schwingarme 4 und 4' des Mikroresonators erstreckt und einen optischen Ringresonator bildet. Beim vorliegenden Ausführungsbeispiel sind die Schwingarme 4 und 4' dazu vollständig als Wellenleiter ausgebildet. Der durch den weiteren Wellenleiter 7" gebildete optische Ringresonator ist mittels eines zusätzlichen Richtkopplers 12 mit dem Wellenleiter 7' gekoppelt und bildet dadurch einen Teil der Auslesevorrichtung dieses Gassensors. Die Schwingarme 4 und 4' des Mikroresonators, der hier wie beim zuvor beschriebenen Ausführungsbeispiel zum Schwingen angeregt werden kann, enden in zwei einander parallel gegenüberliegenden Koppelflächen, so dass Licht zwischen den Enden der beiden Schwingarme 4 und 4' überkoppeln kann. Die Stärke der so zwischen den Enden der beiden Schwingarme 4 und 4' realisierten optischen Kopplung hängt dabei von einem aktuellen Abstand dieser beiden Enden ab und damit von einem Schwingungszustand des mechanischen Mikroresonators. Zusätzlich können die beiden Koppelflächen an den Enden der Schwingarme 4 und 4' teilreflektierend ausgeführt sein, so dass sie zwischen den beiden Schwingarmen 4 und 4' einen Fabry-Perot-Resonator bilden, dessen Resonanzeigenschaften sich mit einer Bewegung der Schwingarme 4 und 4' ändern. Eine solche Änderung der Resonanzeigenschaften des genannten Fabry-Perot-Resonators kann wiederum optisch ausgelesen werden, um die mechanische Schwingung des Mikroresonators zu detektieren.

Bei dem Ausführungsbeispiel aus Fig. 3 erfolgt eine Anregung der Schwingung des als Mikroring ausgeführten Mikroresonators mit den Schwingarmen 4 und 4' vorzugsweise wieder durch eine optische Pulsanregung, indem optische Pulse über den Lichtwellenleiter 5 mit einer Pulswiederholrate, die einer mechanischen Resonanzfrequenz des Mikroresonators entspricht, in den Spalt zwischen den beiden Schwingarmen 4 und 4' eingespeist werden. Diese Pulse bringen dort das zu detektierende Gas durch frequenzselektive Absorption zum Schwingen und führen zu einer hohen Resonanzamplitude des Mikrorings. Eine damit verbundene Auslenkung der Schwingarme 4 und 4' des Mikroresonators wird hier über eine Verschiebung der so genannten free spectral range (FSR) oder allgemein über eine Veränderung der Resonanzeigenschaften des durch den Mikroresonator gebildeten integriert-optischen Ringresonators detektiert. Dadurch, dass der Wellenleiter 7' der durch einen Detektionswellenleiterschaltkreis gebildeten Auslesevorrichtung durch den Richtkoppler 12 optisch an dem Mikroring angekoppelt ist, kann eine Resonanzfrequenzverschiebung des optischen Ringresonators, die durch eine mechanische Schwingung verursacht wird, als Amplitudenänderung detektiert werden. Dazu weist die Auslesevorrichtung im vorliegenden Fall außer der Laserdiode 8, die als Ausleselichtquelle fungiert, zwei Photodioden 9 und 9' sowie einen Spiegel 10 auf, die jeweils mit einem Ende eines der Wellenleiter 7 oder 7' verbunden sind. Dabei könnte auch eine der Photodioden 9 oder 9' durch ein weiteres reflektierendes Element ersetzt sein.

In den Ausführungsbeispielen aus den Fign. 1 bis 3 ist sowohl die Anregungsvorrichtung als auch die Auslesevorrichtung durch einen planaren integriert-optischen Wellenleiterschaltkreis gebildet, wobei die Wellenleiter 7 und 7' der Auslesevorrichtung einen Michelson-Interferometer-Aufbau zeigen. Dabei definieren die Wellenleiter 7 und 7' einen räumlich fixierten Detektionspfad, so dass keine Justage zwischen dem Mikroresonator und dem Detektionspfad erforderlich ist.

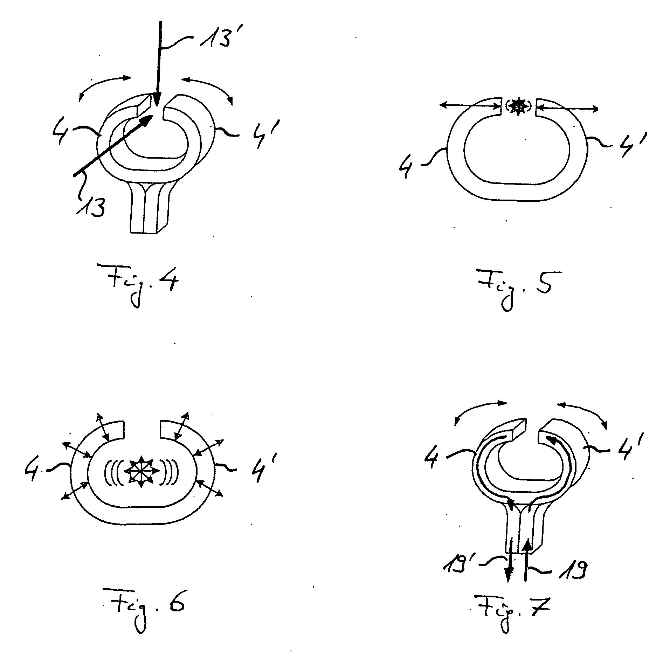

In Fig. 4 ist ein Mikroresonator mit zwei Schwingarmen 4 und 4' dargestellt, der in einem vergleichbaren Sensor verwendet werden kann. Dort ist veranschaulicht, wie eine mechanische Schwingung des Mikroresonators, bei dem die beiden Schwingarme 4 und 4' stimmgabelartig gegeneinander schwingen, optisch angeregt werden kann durch Einstrahlen von Licht aus zwei unterschiedlichen Richtungen 13 oder 13' in einen Zwischenraum zwischen Enden der beiden Schwingarme 4 und 4'. Fig. 5 veranschaulicht, wie dadurch bei einer geeigneten Wahl der Wellenlänge und einer Puls- oder Modulationsfrequenz des zum Anregen verwendeten Lichts zwischen den Enden der Schwingarme 4 und 4' Druckschwankungen erzeugt werden können, die den durch die Schwingarme 4 und 4' gebildeten Mikroresonator abhängig von den Absorptionseigenschaften des ihn umgebenden Gases zu einer mechanischen Schwingung anregen.

Fig. 6 veranschaulicht in entsprechender Darstellung eine alternative Anregung einer mechanischen Schwingung eines gleichartigen Mikroresonators, bei dem das Licht zum Anregen der Schwingung nicht zwischen den Enden der Schwingarme 4 und 4' eingestrahlt wird, sondern mittig in einen durch die Schwingarme 4 und 4' gebildeten Ring.

In Fig. 7 ist der Mikroresonator aus Fig. 4, der entweder vollständig oder in einer von mehreren Schichten als optischer Wellenleiter ausgeführt ist, noch einmal dargestellt. Zum Detektieren der mechanischen Schwingung des Mikroresonators wird von einer Ausleselichtquelle, die hier nicht dargestellt ist, Licht 14 in den Mikroresonator eingespeist, das an den Enden der Schwingarme 4 und 4' reflektiert wird und/oder zwischen den Enden der Schwingarme 4 und 4' überkoppeln kann, um für eine Detektion mit einem lichtempfindlichen Element - entsprechend der Photodiode 9 aus den Ausführungsbeispielen der Fign. 1 bis 3 - wieder ausgekoppelt zu werden. Eine Intensität des dazu ausgekoppelten Lichts 14' hängt dabei von einer Schwingung der Schwingarme 4 und 4' ab, durch die das austretende Licht 14' moduliert wird. Diese Modulierung kann sich ergeben durch eine Abschwächung der optischen Kopplung zwischen den Schwingarmen 4 und 4' mit größer werdendem Abstand zwischen den Enden dieser Schwingarme 4 und 4' und/oder durch eine dadurch verursachte Änderung von Resonanzeigenschaften eines zwischen den Enden der Schwingarme 4 und 4' gebildeten Fabry-Perot-Resonators.

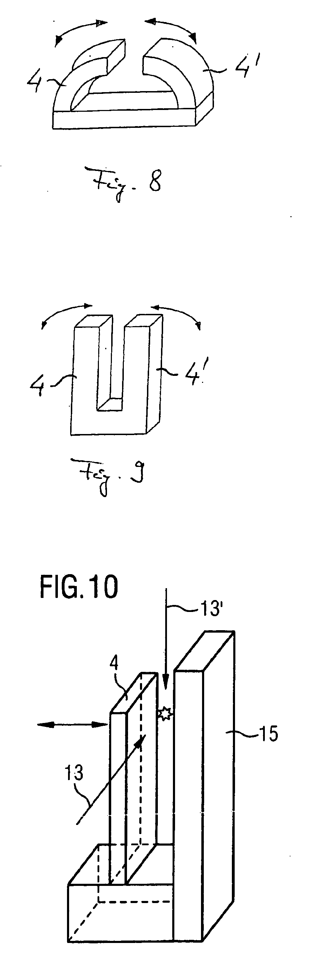

In den Fign. 8 und 9 sind andere Ausführungen von Mikroresonatoren mit jeweils zwei Schwingarmen 4 und 4' dargestellt, die in ähnlichen Sensoren verwendet werden können, um optisch zu einer mechanischen Schwingung angeregt zu werden, die ebenfalls optisch detektiert wird. Ein weiterer Mikroresonator, der den Mikroresonator des Ausführungsbeispiels aus Fig. 1 ähnelt und nur einen Schwingarm 4 aufweist, ist in Fig. 10 dargestellt. Dort ist angedeutet, wie der Schwingarm 4 des Mikroresonators durch Bestrahlen mit Licht einer Anregungsquelle aus einer von zwei möglichen Richtungen 13 oder 13' zu einer optisch auszulesenden Schwingung angeregt werden kann, wenn dieses Licht mit einer Frequenz moduliert ist, die einer Resonanzfrequenz des Mikroresonators entspricht, und eine Wellenlänge hat, die einer Absorptionswellenlänge - eventuell auch einer subharmonischen oder höherharmonischen Anregungswellenlänge - eines in der Umgebung des Schwingarms 4 befindlichen Gases entspricht. In diesem Fall wird das Licht der Anregungsquelle auf einen Raum zwischen dem Schwingarm 4 und einer benachbarten festen Wand 15 gerichtet. Um eine möglichst effektive opto-akustische Anregung des mechanischen Mikroresonators zu erreichen, kann ein Kopplungsbereich zwischen der Anregungsvorrichtung und dem Mikroresonator, der zwischen dem Schwingarm 4 und der Wand 15 gebildet wird, auch so ausgelegt sein, dass ein Anregungspuls durch Reflexion an spiegelnden Elementen wiederholt mit dem zu untersuchenden Gas wechselwirken kann.

Bei den hier vorgeschlagenen Sensoren wird eine Änderung optischer Eigenschaften der Auslesevorrichtung genutzt, um eine erzeugte Schwingung des Mikroresonators zu messen oder auszuwerten. Bei einigen der vorgeschlagenen Ausführungsformen sind dazu zumindest Teile des Mikroresonators, der ein mechanisch schwingfähiges System bildet, so ausgebildet, dass sie als optische Wellenleiter fungieren. Die vorgeschlagene optische Detektion der Schwingung des Mikroresonators kann dabei auf unterschiedliche Weise erfolgen und unterschiedliche Effekte ausnutzen, insbesondere die Änderung eines zwischen Enden der Schwingarme 4 und 4' des jeweiligen Mikroresonators gebildeten Fabry-Perot-Resonators, eine Intensitätsänderung beim Überkoppeln von Licht zwischen diesen Enden und ein Übersprechen von Licht im evaneszenten Feld zwischen verschiedenen Wellenleitern 7, 7' und 7". Die Detektion der mechanischen Schwingung kann dabei insbesondere durch ein interferometrisches Auslesen erfolgen.

Die vorgeschlagenen Sensoren sind in integriert-optischer Bauform gehalten, beispielsweise auf Basis von Silizium, was eine Miniaturisierung der Sensoren zu chipbasierten Systemen ermöglicht. Durch die vorgeschlagene Form der Mikroresonatoren ergibt sich eine hohe Güte der durch sie gebildeten Oszillatoren und damit eine hohe Nachweisempfindlichkeit. Dadurch, dass der jeweilige Schwingungszustand des Mikroresonators optisch abgefragt wird, kann eine Entkopplung des Sensors von gegebenenfalls ebenfalls vorhandenen elektronischen Komponenten erreicht werden. Der Aufbau auf einem gemeinsamen Substrat 1 hat zur Folge, dass sich eine aufwendige Justage in einem Sensorkopf, der das Substrat 1 und die darauf angeordneten Komponenten enthält, erübrigt.

Eine Miniaturisierung der vorgeschlagenen Sensoren wird durch deren integriert optische Bauform in Planartechnik möglich. Eine kostengünstige Massenfertigung kann durch eine Ganz-Wafer-Technik realisiert werden.

Die zum Auslesen der Schwingung vorgesehene optische Detektion kann eine Amplitude einer Auslenkung des mechanischen Mikroresonators mit einer Submikrometer-Auflösung feststellen. Dabei wird zur Detektion der Schwindung vorzugsweise kohärente Laserstrahlung verwendet, bevorzugterweise in Form von Einmoden-Lasersignalen. Durch Verwendung einer Amplituden- oder Phasenmodulationsdetektion kann dabei die höchste physikalisch mögliche Auflösung erreicht werden.

Bei den vorgeschlagenen Sensoren erfolgt die Anregung einer mechanischen Schwingung des jeweiligen Mikroresonators optisch oder akusto-optisch, wobei die so erzeugte Schwingung über eine schwingungsinduzierte Änderung einer Lichtintensität, Wellenlänge oder einer Phase eines Probelichtstrahls ausgelesen wird, insbesondere unter Verwendung einer evaneszenten Wechselwirkung elektromagnetischer Felder, optischer Modenkopplungen oder von Beugungseffekten.

Eine weitere mögliche Ausführungsform sieht eine optische Kopplung von zwei oder mehreren schwingenden Nanodrähten als Mikroresonatoren vor. Dabei ist das gesamte Sensorelement vollständig Faser- oder Wellenleiter-gekoppelt. Der Sensor kann vollständig als integriert-optisches Element ausgeführt sein oder auch in einer Hybridanordnung, in der nur ein Teil des Sensors eine planar-integrierte Optik bildet.

Ein Sensor vorgeschlagener Art ist als Einzelausführung oder auch als Lichtleiter-gekoppeltes Sensorsystem-Netzwerk denkbar, in dem einzelne Sensoren durch unterschiedliche Resonanzfrequenzen gekennzeichnet sind und/oder in dem einzelne Sensorelemente durch individuelle Auslesewellenlängen oder Modulationsfrequenzen eines Probelichtstrahls ausgelesen werden.

Der zum Auslesen der mechanischen Schwingung verwendete Probelichtstrahl oder Auslesestrahl - geführt durch den Lichtwellenleiter 5 - kann durch eine spektral schmalbandige oder, insbesondere im Fall von Sensornetzwerken, auch durch eine spektral breitbandige Lichtquelle erzeugt werden. Die in dem Sensor verwendeten optischen Wellenleiter können aus monokristallinem Halbleitermaterial oder einem anderen dielektrischen Material hergestellt sein. Typisch ist eine planare Realisierung des Sensors in SOI-Technologie, bei der die Oxidschicht in einer Umgebung des Mikroresonators freigeätzt ist. Die vorzugsweise optisch einmodigen Wellenleiter können als Rippenwellenleiter oder als rib-loaded Schichtwellenleiter ausgebildet sein. Der Lichtwellenleiter, der die Anregungslichtwelle mit der Umgebung des Mikroresonators verbindet, kann als io-Wellenleiter ausgeführt sein. Dabei ist es auch denkbar, dass die Anregungspulse und die Abtastsignale in einem einzigen Wellenleiter geführt werden. Schließlich kann auch ein zum Anregen verwendetes Lichtsignal gleichzeitig zur Auslesung eines aktuellen Schwingungszustands des Mikroresonators verwendet werden. Der aktuelle Schwingungszustand des Mikroresonators kann abgetastet werden, indem ein am Mikroresonator reflektierter Strahl mittels eine io-Michelson-Interferometers oder eines io-Young-Interferometers erfolgt, wobei der die Auslesevorrichtung bildende Wellenleiterschaltkreis vorzugsweise in Einmodentechnik realisiert ist. Der Lichtwellenleiter der Anregungsvorrichtung kann durchaus mehrmodig sein.

An Ein- oder Austrittsfacetten können die verwendeten optischen Wellenleiter jeweils in der Breite aufgetapert sein. Der mechanische Mikroresonator kann schließlich in einen geeigneten Gasresonator oder zwischen geeignete Gasreflektoren so eingebracht sein, dass eine von der Anregungslichtquelle eingebrachte Anregungsenergie möglichst effektiv in eine Schwingungsenergie umgewandelt wird.

## Patentansprüche

1. Gassensor mit einem mechanischen Mikroresonator, der eine Anregungsvorrichtung zum optischen Anregen einer mechanischen Schwingung des Mikroresonators sowie eine Auslesevorrichtung zum Detektieren der Schwingung des Mikroresonators aufweist,
**dadurch gekennzeichnet,**
**dass** die Auslesevorrichtung einen zusammen mit dem Mikroresonator auf einem dielektrischen oder halbleitenden Substrat (1) realisierten Wellenleiter (7, 7', 7") zum optischen Auslesen der Schwingung des Mikroresonators umfasst, wobei die Anregungsvorrichtung einen auf demselben Substrat (1) realisierten Lichtwellenleiter (5) aufweist, der eine Anregungslichtquelle (6) optisch mit einer unmittelbaren Umgebung des Mikroresonators verbindet.

2. Gassensor nach Anspruch 1, **dadurch gekennzeichnet, dass** das Substrat (1) durch einen Halbleiterwafer oder einen Teil eines Halbleiterwafers gebildet ist.

3. Gassensor nach einem der Ansprüche 1 oder 2, **dadurch gekennzeichnet, dass** das Substrat (1) aus Silizium gebildet ist oder eine Siliziumschicht umfasst.

4. Gassensor nach einem der Ansprüche 1 bis 3, **dadurch gekennzeichnet, dass** der Mikroresonator und/oder der Lichtwellenleiter (5) der Anregungsvorrichtung und/oder der Wellenleiter (7, 7', 7") der Auslesevorrichtung in oder auf einer Halbleiterschicht realisiert sind, die durch eine stellenweise entfernte Sperrschicht (2) von dem Substrat (1) getrennt ist.

5. Gassensor nach einem der Ansprüche 1 bis 4, **dadurch gekennzeichnet, dass** die Anregungsvorrichtung eine als Anregungslichtquelle (6) dienende Licht-emittierende Diode umfasst.

6. Gassensor nach einem der Ansprüche 1 bis 5, **dadurch gekennzeichnet, dass** die Anregungslichtquelle (6) gepulst oder wellenlängenmoduliert oder intensitätsmoduliert betreibbar ist mit einer Puls- oder Modulationsfrequenz, die einer Resonanzfrequenz des Mikroresonators entspricht.

7. Gassensor nach einem der Ansprüche 1 bis 6, **dadurch gekennzeichnet, dass** die Anregungslichtquelle (6) eingerichtet ist zum Ausstrahlen von Licht durchstimmbarer Wellenlänge.

8. Gassensor nach einem der Ansprüche 1 bis 7, **dadurch gekennzeichnet, dass** der Mikroresonator einen oder zwei Schwingarme (4, 4') aufweist.

9. Gassensor nach Anspruch 8, **dadurch gekennzeichnet, dass** sich der Wellenleiter oder ein weiterer Wellenleiter (7") der Auslesevorrichtung über den Schwingarm oder mindestens einen der Schwingarme (4, 4') des Mikroresonators erstreckt.

10. Gassensor nach einem der Ansprüche 1 bis 9, **dadurch gekennzeichnet, dass** sich der Wellenleiter oder ein weiterer Wellenleiter (7') der Auslesevorrichtung so über einen ersten Schwingarm (4) und einen zweiten Schwingarm (4') des Mikroresonators erstreckt, dass ein Überkoppeln von Licht von einem Ende des ersten Schwingarms (4) zu einem Ende des zweiten Schwingarms (4') möglich ist.

11. Gassensor nach Anspruch 10, **dadurch gekennzeichnet, dass** die Enden der beiden Schwingarme (4, 4') parallele teilreflektierende Flächen aufweisen, die einen Fabry-Perot-Resonator zwischen den beiden Schwingarmen (4, 4') bilden.

12. Gassensor nach einem der Ansprüche 10 oder 11,
**dadurch gekennzeichnet, dass** der erstgenannte Wellenleiter (7, 7') der Auslesevorrichtung optisch mit dem sich über die schwingfähigen Schwingarme erstreckenden Wellenleiter (7") gekoppelt ist.

13. Gassensor nach Anspruch 8, **dadurch gekennzeichnet, dass** der Wellenleiter (7) der Auslesevorrichtung so an den schwingfähigen Schwingarm (4) oder an mindestens einen der Schwingarme (4, 4') des Mikroresonators herangeführt ist, dass aus diesem Wellenleiter (7) austretendes Licht nach einer Reflexion an dem Schwingarm (4) des Mikroresonators wieder in den Wellenleiter (7) einkoppelbar ist.

14. Gassensor nach einem der Ansprüche 1 bis 13, **dadurch gekennzeichnet, dass** die Auslesevorrichtung mindestens zwei auf dem gemeinsamen Substrat (1) realisierte Wellenleiter (7, 7') umfasst, die optisch miteinander gekoppelt sind, wobei einer der Wellenleiter (7, 7') optisch mit dem mechanischen Mikroresonator gekoppelt ist, wobei an einem Ende eines der Wellenleiter (7, 7') eine Ausleselichtquelle angeordnet ist und wobei an einem anderen Ende eines dieser Wellenleiter (7, 7') ein lichtempfindliches Element angeordnet ist.

15. Verwendung eines Gassensors nach einem der Ansprüche 1 bis 14 zum Analysieren einer Gaszusammensetzung, bei der in der Umgebung des Mikroresonators befindliches Gas mit Licht der Anregungslichtquelle (6) so bestahlt wird, dass der Mikroresonator in einen Schwingungszustand versetzt wird, wenn eine Wellenlänge dieses Lichts einer Absorptionswellenlänge des Gases entspricht, wobei der Schwingungszustand mittels der Auslesevorrichtung detektiert wird.

## Claims

1. A gas sensor having a mechanical micro-resonator, which includes an excitation device, for the optical excitation of a mechanical oscillation in the micro-resonator, and a capture device for detecting the oscillation of the micro-resonator, **characterised in that** the capture device includes a waveguide (7, 7', 7") which, together with the micro-resonator, is formed on a dielectric or semiconductor substrate (1), for the optical capture of the oscillation of the micro-resonator, wherein the excitation device includes an optical waveguide (5) which is formed on the same substrate (1) and optically connects an excitation light source (6) to the environment directly surrounding the micro-resonator.

2. A gas sensor according to Claim 1, **characterised in that** the substrate (1) is formed by a semiconductor wafer or part of a semiconductor wafer.

3. A gas sensor according to either of Claims 1 and 2, **characterised in that** the substrate (1) is made from silicon or includes a silicon layer.

4. A gas sensor according to one of Claims 1 to 3, **characterised in that** the micro-resonator and/or the optical waveguide (5) of the excitation device and/or the waveguide (7, 7', 7") of the capture device are formed in or on a semiconductor layer which is separated from the substrate (1) by a barrier layer (2) which is removed at certain points.

5. A gas sensor according to one of Claims 1 to 4, **characterised in that** the excitation device includes a light-emitting diode which serves as the excitation light source (6).

6. A gas sensor according to one of Claims 1 to 5, **characterised in that** the excitation light source (6) may be operated with pulsing or wavelength modulation or intensity modulation, at a pulse or modulation frequency corresponding to a resonant frequency of the micro-resonator.

7. A gas sensor according to one of Claims 1 to 6, **characterised in that** the excitation light source (6) is set up to radiate light having a tunable wavelength.

8. A gas sensor according to one of Claims 1 to 7, **characterised in that** the micro-resonator includes one or two oscillation arms (4, 4').

9. A gas sensor according to Claim 8, **characterised in that** the waveguide or a further waveguide (7") of the capture device extends over the oscillation arm or at least one of the oscillation arms (4, 4') of the micro-resonator.

10. A gas sensor according to one of Claims 1 to 9, **characterised in that** the waveguide or a further waveguide (7') of the capture device extends over a first oscillation arm (4) and a second oscillation arm (4') of the micro-resonator such that a transfer of light from one end of the first oscillation arm (4) to a second end of the second oscillation arm (4') is possible.

11. A gas sensor according to Claim 10, **characterised in that** the ends of the two oscillation arms (4, 4') include parallel, partially reflective surfaces which form a Fabry-Pérot resonator between the two oscillation arms (4, 4').

12. A gas sensor according to either of Claims 10 and 11, **characterised in that** the first-mentioned waveguide (7, 7') of the capture device is optically coupled to the waveguide (7") which extends over the oscillation-capable oscillation arms.

13. A gas sensor according to Claim 8, **characterised in that** the waveguide (7) of the capture device is brought close to the oscillation-capable oscillation arm (4) or to at least one of the oscillation arms (4, 4') of the micro-resonator such that light exiting from this waveguide (7) may, after reflection at the oscillation arm (4) of the micro-resonator, be launched back into the waveguide (7).

14. A gas sensor according to one of Claims 1 to 13, **characterised in that** the capture device includes at least two waveguides (7, 7') which are formed on the common substrate (1) and are optically coupled to one another, wherein one of the waveguides (7, 7') is optically coupled to the mechanical micro-resonator, wherein at one end of one of the waveguides (7, 7') there is arranged a captured light source, and wherein at another end of one of these waveguides (7, 7') there is arranged a light-sensitive element.

15. Use of a gas sensor according to one of Claims 1 to 14 for analysing a gas composition, in which gas which is located in the environment surrounding the micro-resonator is irradiated with light from the excitation light source (6) such that the micro-resonator is put into an oscillating state when a wavelength of this light corresponds to an absorption wavelength of the gas, wherein the oscillating state is detected by means of the capture device.

## Revendications

1. Détecteur de gaz équipé d'un micro-résonateur mécanique, qui présente un dispositif d'excitation pour exercer une excitation optique sur une oscillation mécanique du micro-résonateur, ainsi qu'un dispositif de lecture pour détecter l'oscillation du micro-résonateur,
**caractérisé en ce que**
le dispositif de lecture comprend un guide d'ondes (7, 7', 7") élaboré conjointement avec le micro-résonateur sur un substrat diélectrique ou semi-conducteur (1) pour la lecture optique de l'oscillation du micro-résonateur, dans lequel le dispositif d'excitation présente un guide d'ondes optiques (5) élaboré sur le même substrat (1), qui raccorde une source de lumière d'excitation (6) par voie optique à un environnement direct du micro-résonateur.

2. Détecteur de gaz selon la revendication 1, **caractérisé en ce que** le substrat (1) est formé par une tranche de semi-conducteur ou une partie d'une tranche de semi-conducteur.

3. Détecteur de gaz selon l'une quelconque des revendications 1 ou 2, **caractérisé en ce que** le substrat (1) est formé de silicium ou comprend une couche de silicium.

4. Détecteur de gaz selon l'une quelconque des revendications 1 à 3, **caractérisé en ce que** le micro-résonateur et/ou le guide d'ondes optiques (5) du dispositif d'excitation et/ou du guide d'ondes (7, 7', 7") du dispositif de lecture est ou sont élaborés dans ou sur une couche de semi-conducteur qui est séparée du substrat (1) par une couche diélectrique (2) éloignée par endroits.

5. Détecteur de gaz selon l'une quelconque des revendications 1 à 4, **caractérisé en ce que** le dispositif d'excitation comprend une diode électroluminescente servant de source de lumière d'excitation (6).

6. Détecteur de gaz selon l'une quelconque des revendications 1 à 5, **caractérisé en ce que** la source de lumière d'excitation (6) peut être exploitée en mode pulsé ou en modulé en longueur d'onde ou en modulé en intensité avec une fréquence de pulsation ou de modulation qui correspond à une fréquence de résonance du micro-résonateur.

7. Détecteur de gaz selon l'une quelconque des revendications 1 à 6, **caractérisé en ce que** la source de lumière d'excitation (6) est aménagée pour irradier de la lumière de longueur d'onde ajustable.

8. Détecteur de gaz selon l'une quelconque des revendications 1 à 7, **caractérisé en ce que** le micro-résonateur présente un ou deux bras oscillants (4, 4').

9. Détecteur de gaz selon la revendication 8, **caractérisé en ce que** le guide d'ondes ou un autre guide d'ondes (7") du dispositif de lecture s'étend au-dessus du bras oscillant ou au moins l'un des deux bras oscillants (4, 4') du micro-résonateur.

10. Détecteur de gaz selon l'une quelconque des revendications 1 à 9, **caractérisé en ce que** le guide d'ondes ou un autre guide d'ondes (7') du dispositif de lecture s'étend au-dessus d'un premier bras oscillant (4) et d'un second bras oscillant (4') du micro-résonateur de manière telle qu'un surcouplage de la lumière d'une extrémité du premier bras oscillant (4) jusqu'à une extrémité du second bras oscillant (4') est rendu possible.

11. Détecteur de gaz selon la revendication 10, **caractérisé en ce que** les extrémités des deux bras oscillants (4, 4') présentent des surfaces parallèles en partie réfléchissantes qui forment un résonateur Fabry-Pérot entre les deux bras oscillants (4, 4').

12. Détecteur de gaz selon l'une quelconque des revendications 10 ou 11, **caractérisé en ce que** le premier guide d'ondes mentionné (7, 7') du dispositif de lecture est optiquement couplé au guide d'ondes (7") s'étendant au-dessus des bras oscillants aptes à osciller.

13. Détecteur de gaz selon la revendication 8, **caractérisé en ce que** le guide d'ondes (7) du dispositif de lecture est approché du bras oscillant (4) apte à osciller ou d'au moins l'un des bras oscillants (4, 4') du micro-résonateur de manière telle que la lumière sortant de ce guide d'ondes (7), après réflexion sur le bras oscillant (4) du micro-résonateur, peut être réinjectée dans le guide d'ondes (7).

14. Détecteur de gaz selon l'une quelconque des revendications 1 à 13, **caractérisé en ce que** le dispositif de lecture comprend au moins deux guides d'ondes (7, 7') élaborés sur le substrat commun (1), qui sont optiquement couplés l'un avec l'autre, dans lequel l'un des guides d'ondes (7, 7') est optiquement couplé au micro-résonateur mécanique, dans lequel une source de lumière de lecture est aménagée à une extrémité d'un des guides d'ondes (7, 7') et dans lequel un élément photosensible est aménagé à une autre extrémité d'un de ces guides d'ondes (7, 7').

15. Utilisation d'un détecteur de gaz selon l'une quelconque des revendications 1 à 14, pour analyser une composition gazeuse, dans laquelle le gaz se trouvant dans l'environnement du micro-résonateur est irradié par de la lumière de la source de lumière d'excitation (6) de manière telle que le micro-résonateur est placé dans un état d'oscillation quand une longueur d'onde de cette lumière correspond à une longueur d'onde d'absorption du gaz, dans laquelle l'état d'oscillation est détecté au moyen du dispositif de lecture.
